# EUROPEAN PATENT SPECIFICATION

(11) **EP 3 887 255 B1**
(45) Date of publication and mention of the grant of the patent: **21.08.2024**
(21) Application number: 19808830.4
(22) Date of filing: 28.11.2019
(51) Int. Cl.: B64F 1/305

(54) **METHOD FOR AUTOMATED HANDLING A PASSENGER BOARDING BRIDGE**
VERFAHREN ZUR AUTOMATISIERTEN HANDHABUNG EINER FLUGGASTBRÜCKE
PROCÉDÉ DE GESTION AUTOMATISÉE DE PASSERELLE D'EMBARQUEMENT DE PASSAGERS

(30) Priority: 29.11.2018 EP 18382871; 09.01.2019 DE 102019200159
(43) Date of publication of application: 06.10.2021
(73) Proprietor: TK Airport Solutions, S.A., 33682 Mieres (Asturias) (ES); TK ESCALATOR NORTE SA, 33682 Mieres (ES)
(72) Inventor: HÄNLE, Markus, 73268 Erkenbrechtsweiler (DE); DECONINCK, Philip, 33203 Gijon Asturias (ES); MURIAS BERMEJO, Antonio, 33212 Gijón; Asturias (ES); PEREZ VAZQUEZ, Eduardo, 33206 Gijón, Asturias (ES); FLÓREZ CASTRO, Alberto, 33690 Lugo de Llanera, Asturias (ES); MODASER SABA, Isaak, 45138 Essen (DE)
(74) Representative: Jacobi, Nicolas
(86) International application number: PCT/EP2019/082869
(87) International publication number: WO 2020/109449

(56) References cited:
- EP-A1- 3 301 028
- JP-A- 2003 063 499
- JP-A- 2004 161 195
- JP-A- 2007 038 853
- US-A1- 2003 145 404

## Description

The invention refers to a method for automated handling a passenger boarding bridge according to claim 1.

Nowadays the docking of the passenger boarding bridge (PBB) to an aircraft is performed manually. An operator is using a joystick, giving immediate operation signals to the drive means. This kind of docking is time consuming and requires an operator. In case the operator is still busy at another PBB, the docking is delayed, which leads to costly delays in ground handling of aircrafts. Consequently, the market requires a possibility of automatic docking, in which no fully trained and certified operator is needed through the complete docking procedure anymore.

A camera based automatic docking is disclosed in WO 2017/198605 A1. To detect a door contour, a line of windows is detected. A door contour is searched at a position adjacent to the line of windows. Based on the detected door an automatic movement of the PBB is initiated, to get the PBB in alignment with the door of the aircraft.

German patent application DE 10 2018 211 492.7 discloses a method for automated docking a passenger boarding bridge to an aircraft.

German patent application DE 10 2018 215 519.4 discloses a method for detecting the aircraft door status, i.e. whether the door is closed or not closed.

German patent application DE 10 2018 212 530.9 discloses a method for automated undocking a passenger boarding bridge from an aircraft.

Document US 2003 145404 A1 discloses a system for indicating an alignment status of a passenger bridge with respect to an aircraft, absent the intervention of a bridge-operator.

Document EP 3 301 028 A1 discloses a coupling module being an interface between a passenger bridge and the fuselage of an aircraft. The coupling module has a floor head unit which is horizontally slidable in a direction transverse to the longitudinal axis of the aircraft.

Document JP 2004 161195 a discloses a remote monitoring system of a boarding bridge in an airport, the system having a server for centralized control provided at maintenance a check centre of the boarding bridge, the server being connected to terminal devices within the boarding bridge through a local intranet.

The term automated handling is to be understood as generic term covering terms automated docking and automated undocking.

It is the object to improve the procedures in connection with the automated handling of a passenger boarding bridge. The object of the invention is solved by a method according to the main claims; embodiments are disclosed in the subclaims and the description.

Within the scope of the application an operator is meant to be a person located at the airport and operating or supervising the function of the passenger boarding bridge. The operator is not a member of the aircraft crew.

The invention is explained in more detail by means of the figure, the figures show:
- fig. 1: a top view on an aircraft and a passenger boarding bridge;
- fig. 2: sections through the aircraft and the passenger boarding bridge during the inventive method;
- fig. 3: frontal views on the passenger boarding bridge during the inventive method;
- fig. 4: top views into the bridgehead of the during the inventive method;
- fig. 5: a structure diagram of the main components of the passenger boarding bridge
- fig. 6: a perspective view on a floor system of the passenger boarding bridge.

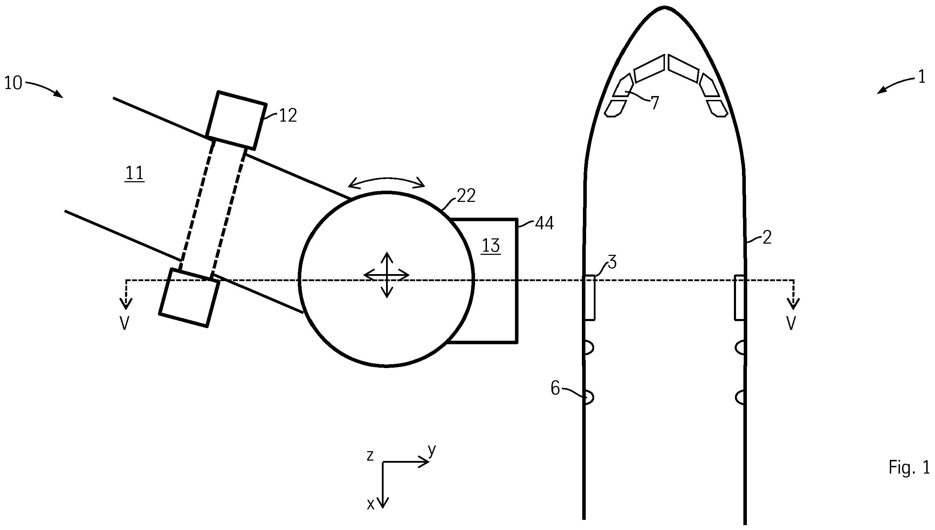

Figure 1 shows a passenger boarding bridge 10 which is to be docked to or undocked from an aircraft 1 in an automated docking procedure (e.g. disclosed in WO2019/229105 A1) or undocking procedure (e.g. disclosed in patent application WO2020/002405 A1).

The passenger boarding bridge 1 has a tunnel 11 which can be telescoped. During docking a bridgehead 13 is to be aligned with an aircraft door 3 of the aircraft 1. A drive system 12 is provided for moving the passenger boarding bridge, i.e. for changing the position of the bridgehead 13. For more background information reference is made to the aforementioned applications, the content of which is incorporated herein by reference.

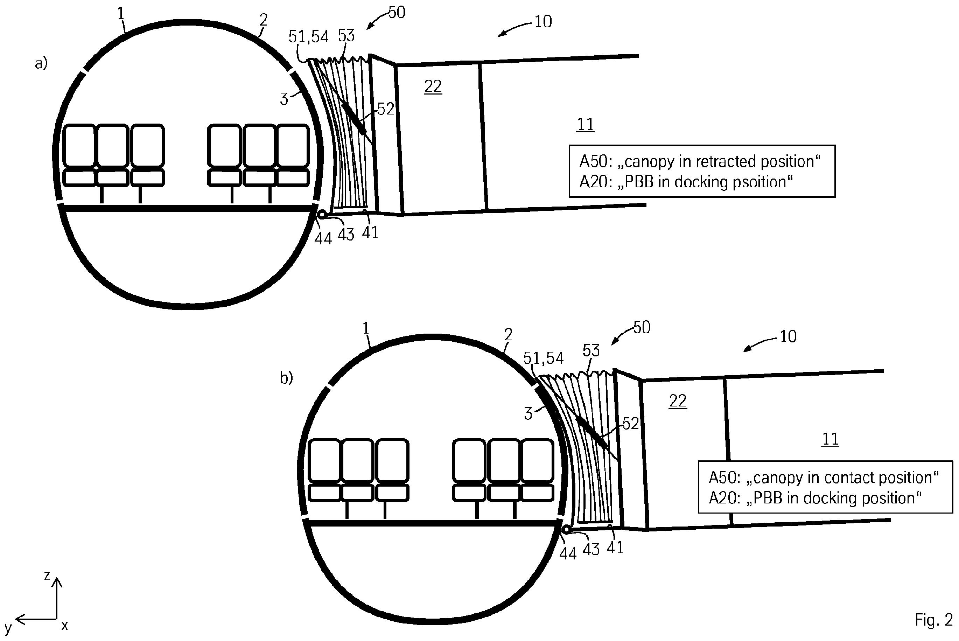

The bridgehead 13 can be moved by means of the drive means 12 into a docking position which is shown in figures 2a and 2b. Here an approaching edge 44 of a floor bumper 43 is aligned to the fuselage 2 in a manner, that passengers can safely step over from a floor 41 of the bridgehead 13 through the open aircraft door 3 into the aircraft 1. In the docking position the approaching edge 44 may contact the fuselage 2 or there may be a small gap between the approaching edge and the fuselage. A PBB position signal A20 indicating that the PBB 10 is in the docking position (figures 2a, 2b) or alternatively in a retracted position (not shown).

The bridgehead 13 is equipped with a canopy 50, having a canopy roof 53, a canopy bumper 51 and a canopy drive 52. The canopy drive 52 is adapted to move the canopy roof 53 and the bumper 51 between a contact position (figure 2b) and a retracted position (figure 2a). In the contact position the bumper 51 overlaps, in some embodiments contacts, the aircraft fuselage 2 so that passengers are protected from rain; in the retracted position, bumper 51 is distant to the aircraft fuselage 2 (figure 2a). During docking the canopy 50 may still be in the retracted position when the bridgehead already has reached it's docking position. As soon as the movement of the bridgehead 13 is finished a movement of the canopy 50 into the contact position can be started. A canopy sensor 54 can detect any contact between the bumper 51 and the fuselage 2 for providing a canopy status signal A50.

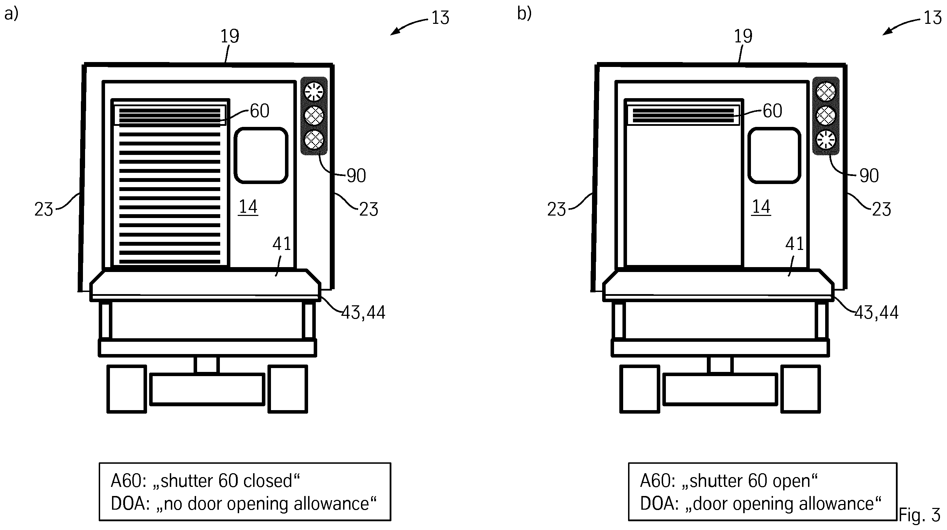

Figure 3 shows the bridgehead in front view. A bridgehead interior 14 is defined by the bridgehead floor 41, side walls 23 and a cabin roof 19. A shutter 60 is provided to close a passage for passengers between the tunnel 11 and the bridgehead 13 for safety reasons. The shutter 60 can be closed (figure 3a) or opened (figure 3b). A shutter status signal A60 is provided by the shutter 60 indicating the closed or open status. The shutter 60 can be a rolling shutter as illustrated in figure 3 or usual door provided with a horizontal opening / closing mechanism.

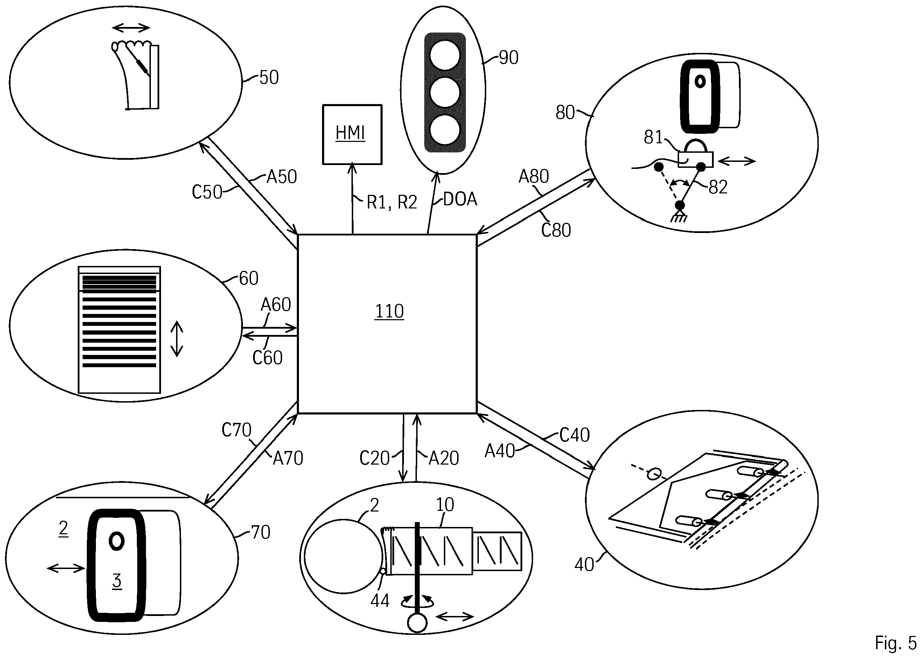

Within the bridgehead there is provided a signaling device 90, in this particular embodiment a signaling lamp 90. The signaling device 90 is adapted to provide a door opening allowance to the aircraft crew. This can be a provided in the form of an, in particular visual, indication, whether the crew is allowed to open the aircraft door or not. A crew member can identify the status of the signaling device in particular through a window in the fuselage. If the signaling device indicates allowance for door opening (in particular a green light as shown in figure 5b), the crew may open the door. As long as the signaling device indicates, that the door must not be opened (in particular a red light as shown in figure 3a) the crew is not allowed to open the door. During undocking the signaling device can switch from door opening allowance status to door opening not allowance status. Then crew has to close the door.

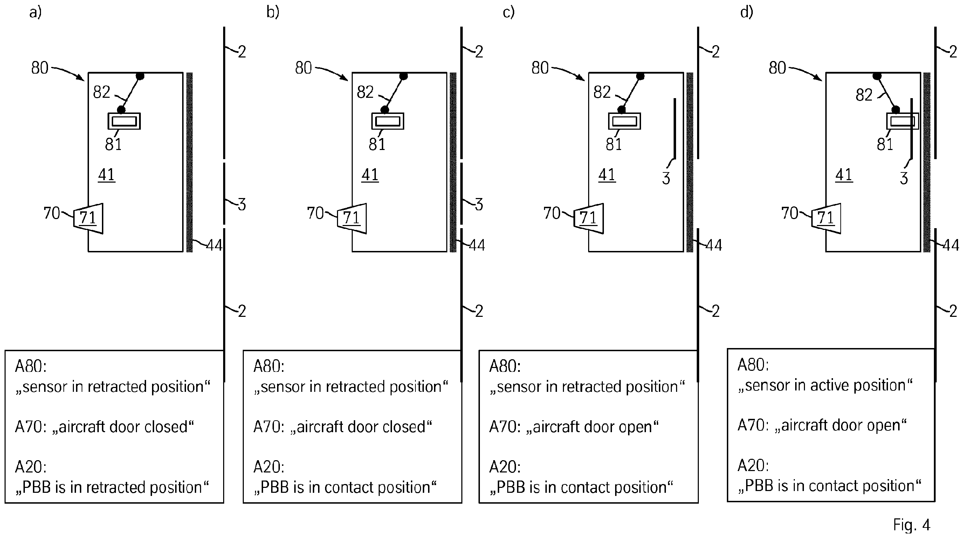

Figure 4 shows the functionality of a leveling system 80, in particular a safety leveling system from a top view perspective on to the floor 41 of the bridgehead 13. Here the leveling system 80 comprises a safety shoe 81, which can be placed between the aircraft door 3 and the floor 41 of the bridgehead 13. The safety shoe 81 is a sensors detecting unintended lowering of the aircraft door 3 relative to the floor 41. In figure 4a the PBB 10 is still in a retracted position. The leveling system 80 is in an inactive state. In figure 4b the PBB 10 is in the docking position, since fuselage 3 is contacting (small gap possible) the approaching edge 44 of the bridgehead 13. The leveling system is still inactive in figure 4b. In particular the safety shoe 81 is still outside of a swivel area of the door 3, when the PBB 10 is in docking position.

After the aircraft door 3 is opened (figure 4c) the leveling system 80 is activated, in particular by employing a positioning actuator 82. In particular the safety shoe 81 is put between the aircraft door 3 and the bridgehead floor 41 (figure 4d). KR 2013 0050565 A discloses a system for positioning a safety shoe.

In figures 4a and 4b the aircraft door 3 is closed. The door status can be detected by an aircraft door status detection system 70 in particular having a camera 71. An exemplary embodiment is described in patent application WO2020/030735 A1.

The door status detection system 70 issues an aircraft door status signal A70, which can be either "closed" or "open". Not before the aircraft door status signal A70 changes from "closed" to "open" the safety shoe 81 is placed under the opened aircraft door 3 as shown in figure 4d.

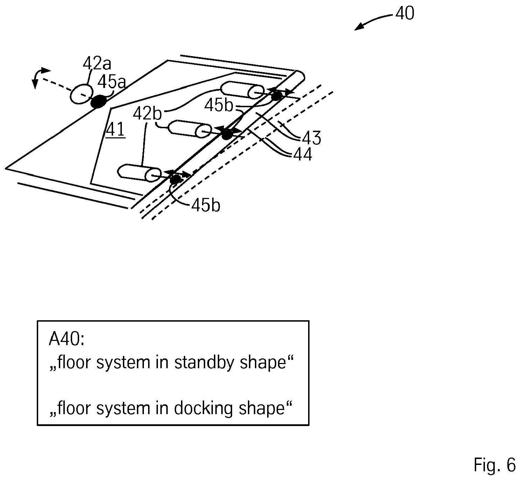

Figure 6 shows a floor system 40. The floor system comprises the floor 41 of the bridgehead 13 and the floor bumper 44 with the approaching edge 43. Figure 6 shows the floor system in a standby shape. Here the floor 41 is oriented parallel to the bridgehead 13 and the bumper 43 is retracted. The floor system 40 issues signal A40, that it is the a standby shape.

For providing a perfect alignment with the aircrafts fuselage (not shown) the shape of the floor system can be varied. In particular the angular orientation of the floor with respect to the bridgehead can be changed by means of a rotational actuator 42a. The curvature of the bumper 44 can be varied by means of bumper actuators. A respective example of a bumper, which curvature can be varied by actuators, is disclosed in EP 3 495 276 A1.

Sensors 42, 42b are provided to determine the shape of the floor system. The values provided by the sensors are used to issue the floor shape signal A40.

Figure 5 shows schematically the units of the boarding system. A central control unit 110 is provided for controlling the functions of devices of the PBB. The control unit 110 receives the following signals:
- the PBB position signal A20,
- the floor shape signal A40,
- the canopy status signal A50,
- the shutter status signal A60,
- the aircraft door status signal A70 and
- the leveling system status signal A80.

The control unit 110 provides the following instructions:
- an instruction C20 to the drive means 12 to move the PBB
- an instruction C40 to the floor actuators 12 to change the shape of the floor system 40,
- an instruction C50 to change status of canopy,
- an instruction C60 to change the status of the shutter,
- an instruction C70 to check the door status,
- an instruction C80 to change the status of the leveling system.

When docking is finished, the control unit provides a "ready for passengers entering the boarding bridge" signal R1 to an operator. The "ready for passengers entering the boarding bridge" signal R1 is indicated via a human-machine-interface HMI, in particular via an optical or acoustical signal. The control unit 110 provides further a door opening allowance DOA, which is output by the signaling means 90 to the aircraft crew in particular in the form of a green light (see figure 3b).

When boarding is finished and the PBB is prepared so that the door can be closed the control unit provides a ready for door closing signal R2 to an operator. The ready for door closing signal R2 is indicated via a man machine interface HMI, in particular via an optical or acoustical signal. The control unit 110 further withdraws the door opening allowance DOA, which is output by the signaling means 90 to the aircraft crew, in particular in the form of a red light (see figure 3a).

During docking: In particular the control unit is adapted to work according to one or more of the following relationship between signals and instructions or combinations thereof:
After or not before the PBB position signal A20 indicates that the PBB 10 has reached the docking position
   - an instruction C40 is provided to change the shape of the floor system , in particular form a from a standby shape, to a docking shape, and/or
   - an instruction C50 is is provided to change the status of the canopy from retracted position to contact position, and/or
   - an instruction C60 is provided to change the status of the shutter 60 from closed to open, and/or
   - an instruction C70 is provided to check the door status of the aircraft door 3, and/or
   - an instruction C80 is provided to change the status of the leveling system 80 from inactive to active and/or,
   - a door opening allowance DOA is provided and in particular indicated to the aircraft crew member via signaling means 90;
   - the ready to boarding signal R1 is provided;
      and/or
after or not before the canopy status signal A50 indicates that the canopy 50 has reached the docking position,
   - an instruction C60 is provided to change the status of the shutter 60 from closed to open, and/or
   - an instruction C70 is provided to check the door status of the aircraft door 3, and/or
   - an instruction C80 is provided to change the status of the leveling system 80 from inactive to active and/or,
   - a door opening allowance DOA is provided and in particular indicated to the aircraft crew member via signaling means 90;
   - the ready to boarding signal R is provided;
      and/or
after or not before the shutter status signal A60 indicates that the shutter is open;
   - a door opening allowance DOA is provided and in particular indicated to the aircraft crew member via signaling means 90;
   - the ready to boarding signal R is provided;
      and/or
after or not before the aircraft door status signal A70 indicates that the aircraft door 3 is open
   - an instruction C60 is provided to change the status of the shutter 60 from closed to open, and/or
   - the ready to boarding signal R is provided;
      and/or
after or not before the leveling system status signal A80 indicates that the leveling system 80 is active
   - an instruction C60 is provided to change the status of the shutter 60 from closed to open, and/or
   - a door opening allowance DOA is provided and in particular indicated to the aircraft crew member via signaling means 90;
   - the ready to boarding signal R is provided;
      and/or
after or not before the floor shape signal A40 A80 indicates that the fllor system 40 is in a docking shape
   - an instruction C60 is provided to change the status of the shutter 60 from closed to open, and/or
   - the ready to boarding signal R is provided;
      and / or

During undocking: In particular the control 110 unit is adapted to work according to one or more of the following relationship between signals and instructions or combinations thereof:
After or not before the aircraft door status signal A70 indicates that the aircraft door 3 is closed
   - an instruction is C20 is provided to change the status of the PBB from docking position to retracted position, and/or
   - an instruction C40 is provided to change the floor system shape from docking shape to standby shape, and/or
   - an instruction C50 is provided to change the status of the canopy from contact position to retracted position, and/or
   - an instruction C60 is provided to change the status of the shutter 60 from open to closed,
      and/or
   - an instruction C80 is provided to change the status of the leveling system 80 from active to inactive and/or,
   - a door opening allowance DOA is withdrawn and in particular indicated to the aircraft crew member via signaling means 90;
   - the ready to close the aircraft door signal R2 is provided;
after or not before the canopy status signal A20 indicates that the canopy is in the retracted position
   - an instruction is C20 is provided to change the status of the PBB from docking position to retracted position, and/or
   - an instruction is C50 is provided to change the status of the canopy from contact position to retracted position, and/or
   - an instruction C60 is provided to change the status of the shutter 60 from open to closed,
      and/or
   - an instruction C80 is provided to change the status of the leveling system 80 from active to inactive and/or,
after or not before a door opening allowance DOA is withdrawn and in particular indicated to the aircraft crew member via signaling means 90;
   - an instruction C40 is provided to change the floor system shape from docking shape to standby shape, and/or
   - the ready to close the aircraft door signal R2 is provided;
after or not before the shutter status signal A60 indicates that the shutter 60 is closed
   - an instruction is C20 is provided to change the status of the PBB from docking position to retracted position, and/or
      an instruction C40 is provided to change the floor system shape from docking shape to standby shape, and/or
   - an instruction is C50 is provided to change the status of the canopy from contact position to retracted position, and/or
   - an instruction C80 is provided to change the status of the leveling system 80 from active to inactive and/or,
   - a door opening allowance DOA is withdrawn and in particular indicated to the aircraft crew member via signaling means 90;
   - the ready to close the aircraft door signal R2 is provided;
      and/or
after or not before leveling system status signal A80 indicates that the leveling system 80 is inactive
   an instruction C40 is provided to change the floor system shape from docking shape to standby shape, and/or
   - an instruction is C20 is provided to change the status of the PBB from docking position to retracted position, and/or
   - a door opening allowance DOA is withdrawn and in particular indicated to the aircraft crew member via signaling means 90;
   - the ready to close the aircraft door signal R2 is provided.

### list of reference signs

- 1: aircraft
- 2: aircraft fuselage
- 3: aircraft door
- 6: side window
- 7: cockpit window
- 10: Passenger boarding bridge
- 11: tunnel
- 12: drive means
- 13: bridgehead
- 14: interior of bridgehead
- 41: floor
- 43: floor bumper
- 19: cabin roof
- 110: control unit
- 44: approaching edge
- 21: direction to airport terminal building
- 22: round cabin
- 23: cabin side wall
- 40: floor system
- 41: floor
- 42a,b: floor shape actuators
- 43: floor bumper
- 44: approaching edge
- 45a,b: floor shape sensor
- 50: canopy system
- 51: canopy bumper
- 52: canopy drive
- 53: canopy roof
- 54: canopy sensor
- 60: shutter
- 70: door status detection system
- 71: camera
- 80: safety leveling system
- 81: safety shoe
- 82: positioning actuator
- 90: signal lights for aircraft crew

- x: longitudinal direction
- y: transverse direction
- z: height direction
- A: status signal

- A20: PBB position signal (docking position / retracted position)
- A40: floor shape signal (docking shape / standby shape)
- A50: canopy status signal (contact / retracted)
- A60: shutter status signal (open / closed)
- A70: aircraft door status signal (open / closed)
- A80: leveling system status signal (inactive / active)
- DOA: door opening allowance

- C20: instruction to move PBB
- C40: instruction to change the shape of the floor system
- C50: instruction to change status of canopy
- C60: instruction to change status of shutter
- C70: instruction to check door status
- C80: instruction to change status of leveling system

- R1: ready for boarding
- R2: ready to close the aircraft door

## Claims

1. Method for automated handling a passenger boarding bridge (PBB) (10),
the method comprising the step of moving the passenger boarding bridge from a retracted position into a docking position,
in which a bridgehead (13) of the passenger boarding bridge (10) is temporary aligned with an aircraft door (3),
wherein the passenger boarding bridge is handled in dependency of at least one status signal (A) referring to the status of an ancillary component (50, 60, 70, 80),
**characterized by**
not before a PBB position signal (A20) is indicating that the bridgehead (13) has reached the docking position:
automatically transferring a leveling system (80) into an activated state,
and issuing a docking finished signal (R1), if a signal (A80) is provided, which is indicating that leveling system (80) is activated.

2. Method according to the preceding claim,
**characterized in**
**that** the ancillary component (50) is a canopy;
**that** the approval signal (A50) indicates, that the canopy (50) is in a retracted position.

3. Method according to any of the preceding claims,
**characterized in**
**that** the ancillary component (60) is a shutter adapted to open and close a passageway for passengers between the bridgehead (13) and the tunnel (11),
**that** the approval signal (A60) indicates, that the shutter is closed or open.

4. Method according to any of the preceding claims,
**characterized in**
**that** the ancillary component (20) is an aircraft door status detection system (70),
which is adapted to detect an aircraft door status at least indicative whether the aircraft door is closed or not closed,
in particular that upon a change of the door status, in particular upon a status change from closed to open, then
- a movement of the bridgehead (13),
- a movement of the canopy (50), and/or
- a movement of the shutter (60),
is prevented.

5. Method according to any of the preceding claims,
**characterized in**
**that** the ancillary component is a floor system (40), wherein the floor system is adapted to change its shape,
**that** the approval signal (A40) indicates, that the floor system (40) is in a standby shape and/or in a docking shape.

6. Method according to any of the preceding claims,
**characterized in**
**that** in the retracted position the bridgehead (13) is remote from the aircraft, and in docking position the bridgehead (13) is aligned to the door (3) of the aircraft (1).

7. Method according to any of the preceding claims,
**characterized by**
after or not before the aircraft door status signal (A70) is indicating that the aircraft door (3) is open and/or not before the floor shape signal (A40) is indicating the floor system is in the docking shape:
automatically transferring a leveling system (80) into an activated state, in particular moving a safety shoe (81) in a position below the open aircraft door (3).

8. Method according to any of the preceding claims,
**characterized by**
after or not before the PBB position signal (A20) is indicating that the bridgehead (13) has reached the docking position and/or after or not before the canopy signal (A50) is indicating that the canopy (13) has reached the contact position and/or not before a floor shape signal (A40) is indicating the floor system is in the docking shape:
automatically opening a shutter (60) opening a passage for passengers between the tunnel (11) and the bridgehead (13).

9. Method according to any of the preceding claims,
**characterized by**
issuing a docking finished signal (R1), if
- a signal (A20) is provided, which is indicating that the PBB is in a docking position, and/or
- a signal (A40) is provided which is indicating the a floor system (40) is in a docking shape, and/or
- a signal (A50) is provided, which is indicating that the canopy is in a contact position, and/or
- a signal (A60) is provided, which is indicating that a shutter (60) is open, and/or
- a signal (A70) is provided, which is indicating that aircraft door (3) is open, and/or
in particular the docking finished signal (R1) is provided to an operator via a human-machine-interface (HMI).

10. Method according to any of the preceding claims,
**characterized by**
after or not before the aircraft door status signal (A70) is indicating that the aircraft door (3) is closed:
automatically moving the safety shoe (81) into a stand by position out of a swing area of the aircraft door (3).

11. Method according to any of the preceding claims,
**characterized by**
after or not before the aircraft door status signal (A70) is indicating that the aircraft door (3) is closed,
automatically moving the canopy (50) from the contact position into the retracted position.

12. Method according to any of the preceding claims,
**characterized by**
after or not before an aircraft door status signal (A70) is indicating that the aircraft door (3) is closed,
automatically transferring the floor system (40) from a docking shape into a standby shape.

13. Method according to any of the preceding claims,
**characterized by**
issuing a ready for door closing signal (R2), if
- a signal (A50) is provided, which is indicating that the canopy is in a retracted position, and/or
- a signal (A60) is provided, which is indicating that a shutter (60) is closed, and/or
- a signal (A70) is provided, which is indicating that an aircraft door (3) is open, and/or
- a signal (A80) is provided, which is indicating that said leveling system (80) is inactivated;
in particular the ready for door closing signal (R2) is provided to an operator via a man machine interface (MMI) and/or the door closing signal (R2) is provided to an automated door closing mechanism with in the aircraft.

14. Method according to any of the preceding claims
**characterized by**
providing a door opening allowance (DOA) to the aircraft crew, indicating that the aircraft door is allowed to be opened in particular during docking;
in particular the door opening allowance is provided by a visual signal,
in particular the door opening allowance (DOA) can be recognized by the aircraft crew within the aircraft,
in particular the door opening allowance (DOA) is provided by a signaling device (90) located at the bridgehead (13).

## Patentansprüche

1. Verfahren zur automatisierten Handhabung einer Fluggastbrücke (PBB) (10),
wobei das Verfahren den Schritt des Bewegens der Fluggastbrücke aus einer eingefahrenen Position in eine Andockposition umfasst,
bei der ein Brückenkopf (13) der Fluggastbrücke (10) temporär auf eine Flugzeugtür (3) ausgerichtet ist, wobei die Fluggastbrücke in Abhängigkeit von mindestens einem Statussignal (A), das sich auf den Status einer Zusatzkomponente (50, 60, 70, 80) bezieht, gehandhabt wird,
**gekennzeichnet durch**
nicht bevor ein PBB-Positionssignal (A20) angibt, dass der Brückenkopf (13) die Andockposition erreicht hat:
automatisches Überführen eines Nivelliersystems (80) in einen aktiv geschalteten Zustand,
und Ausgeben eines Signals (R1) "Andocken beendet", wenn ein Signal (A80) bereitgestellt wird, das angibt, dass das Nivelliersystem (80) aktiv geschaltet ist.

2. Verfahren nach dem vorhergehenden Anspruch, **dadurch gekennzeichnet**
**dass** die Zusatzkomponente (50) ein Schutzdach ist;
**dass** das Freigabesignal (A50) angibt, dass sich das Schutzdach (50) in einer eingefahrenen Stellung befindet.

3. Verfahren nach einem der vorhergehenden Ansprüche, **dadurch gekennzeichnet**
**dass** die Zusatzkomponente (60) eine Verschlussklappe ist, die angepasst ist, um einen Durchgang für Fahrgäste zwischen dem Brückenkopf (13) und dem Tunnel (11) zu öffnen und zu schließen,
**dass** das Freigabesignal (A60) angibt, dass die Verschlussklappe geschlossen oder offen ist.

4. Verfahren nach einem der vorhergehenden Ansprüche, **dadurch gekennzeichnet**
**dass** die Zusatzkomponente (20) ein Flugzeugtürstatus-Erkennungssystem (70) ist, das angepasst ist, um einen Flugzeugtürstatus zu erkennen, der zumindest kennzeichnend dafür ist, ob die Flugzeugtür geschlossen oder nicht geschlossen ist,
insbesondere, dass bei einer Änderung des Türstatus, insbesondere bei einer Zustandsänderung von geschlossen zu offen, dann
- eine Bewegung des Brückenkopfes (13),
- eine Bewegung des Schutzdaches (50), und/oder
- eine Bewegung der Verschlussklappe (60),
verhindert wird.

5. Verfahren nach einem der vorhergehenden Ansprüche, **dadurch gekennzeichnet**
**dass** die Zusatzkomponente ein Bodensystem (40) ist, wobei das Bodensystem angepasst ist, seinen Zustand zu ändern,
**dass** das Freigabesignal (A40) angibt, dass sich das Bodensystem (40) in einem Bereitschaftszustand und/oder in einem Andockzustand befindet.

6. Verfahren nach einem der vorhergehenden Ansprüche, **dadurch gekennzeichnet**
**dass** der Brückenkopf (13) in der eingefahrenen Position vom Flugzeug entfernt ist und in der Andockposition der Brückenkopf (13) mit der Tür (3) des Flugzeugs (1) ausgerichtet ist.

7. Verfahren nach einem der vorhergehenden Ansprüche, **gekennzeichnet durch**
nachdem oder nicht bevor das Flugzeugtür-Statussignal (A70) angibt, dass die Flugzeugtür (3) offen ist, und/oder nicht bevor das Boden-Zustandssignal (A40) angibt, dass sich das Bodensystem in dem Andockzustand befindet:
automatisches Überführen eines Nivelliersystems (80) in einen aktiv geschalteten Zustand, insbesondere Bewegen eines Sicherheitsschuhs (81) in eine Position unterhalb der offenen Flugzeugtür (3).

8. Verfahren nach einem der vorhergehenden Ansprüche, **gekennzeichnet durch**
nachdem oder nicht bevor das PBB-Positionssignal (A20) angibt, dass der Brückenkopf (13) die Andockposition erreicht hat, und/oder nachdem oder nicht bevor das Schutzdachsignal (A50) angibt, dass das Schutzdach (13) die Kontaktposition erreicht hat, und/oder nicht bevor ein Boden-Zustandssignal (A40) angibt, dass sich das Bodensystem in dem Andockzustand befindet:
automatisches Öffnen einer Verschlussklappe (60), die einen Durchgang für Fahrgäste zwischen dem Tunnel (11) und dem Brückenkopf (13) öffnet.

9. Verfahren nach einem der vorhergehenden Ansprüche, **gekennzeichnet durch**
Ausgeben eines Signals (R1) "Andocken beendet", wenn
- ein Signal (A20) bereitgestellt wird, das angibt, dass sich die PBB in einer Andockposition befindet, und/oder
- ein Signal (A40) bereitgestellt wird, das angibt, dass sich das Bodensystem (40) in einem Andockzustand befindet, und/oder
- ein Signal (A50) bereitgestellt wird, das angibt, dass sich das Schutzdach in einer Kontaktposition befindet, und/oder
- ein Signal (A60) bereitgestellt wird, das angibt, dass die Verschlussklappe (60) offen ist, und/oder
- ein Signal (A70) bereitgestellt wird, das angibt, dass die Flugzeugtür (3) offen, und/oder
insbesondere das Signal (R1) "Andocken beendet" einem Bediener über eine Mensch-Maschine-Schnittstelle (HMI) bereitgestellt wird.

10. Verfahren nach einem der vorhergehenden Ansprüche, **gekennzeichnet durch**
nachdem oder nicht bevor das Flugzeugtür-Statussignal (A70) angibt, dass die Flugzeugtür (3) geschlossen ist: den Sicherheitsschuh (81) automatisch in eine Bereitschaftsposition außerhalb des Schwenkbereichs der Flugzeugtür (3) zu bewegen.

11. Verfahren nach einem der vorhergehenden Ansprüche, **gekennzeichnet durch**
nachdem oder nicht bevor das Flugzeugtür-Statussignal (A70) angibt, dass die Flugzeugtür (3) geschlossen ist, automatisch das Schutzdach (50) von der Kontaktposition in die eingefahrene Position zu bewegen.

12. Verfahren nach einem der vorhergehenden Ansprüche, **gekennzeichnet durch**
nachdem oder nicht bevor ein Flugzeugtür-Statussignal (A70) angibt, dass die Flugzeugtür (3) geschlossen ist, das Bodensystem (40) automatisch von einem Andockzustand in einen Bereitschaftszustand zu überführen.

13. Verfahren nach einem der vorhergehenden Ansprüche, **gekennzeichnet durch**
Ausgeben eines Signals (R2) für die Bereitschaft zum Schließen der Tür, wenn
- ein Signal (A50) bereitgestellt wird, das angibt, dass sich das Schutzdach in einer eingefahrenen Position befindet, und/oder
- ein Signal (A60) bereitgestellt wird, das angibt, dass eine Verschlussklappe (60) geschlossen ist, und/oder
- ein Signal (A70) bereitgestellt wird, das angibt, dass die Flugzeugtür (3) offen ist, und/oder
- ein Signal (A80) bereitgestellt wird, das angibt, dass das Nivelliersystem (80) inaktiv geschaltet ist;
insbesondere das Signal für die Bereitschaft zum Schließen der Tür (R2) über eine Mensch-Maschine-Schnittstelle (MMI) an einen Bediener bereitgestellt wird und/oder das Türschließsignal (R2) an einen automatischen Türschließmechanismus im Flugzeug bereitgestellt wird.

14. Verfahren nach einem der vorhergehenden Ansprüche **gekennzeichnet durch**
Bereitstellen einer Türöffnungserlaubnis (DOA) für die Flugzeugbesatzung, die angibt, dass die Flugzeugtür insbesondere während des Andockens geöffnet werden darf; insbesondere die Türöffnungserlaubnis **durch** ein optisches Signal bereitgestellt wird,
insbesondere die Türöffnungserlaubnis (DOA) von der Flugzeugbesatzung im Flugzeug wahrgenommen werden kann, insbesondere die Türöffnungserlaubnis (DOA) **durch** eine am Brückenkopf (13) positionierte Signalisiervorrichtung (90) bereitgestellt wird.

## Revendications

1. Procédé de gestion automatisée d'une passerelle d'embarquement de passagers (PBB) (10),
le procédé comprenant l'étape de déplacement de la passerelle d'embarquement de passagers d'une position rétractée à une position d'accostage,
dans lequel une tête de passerelle (13) de la passerelle d'embarquement de passagers (10) est alignée temporairement avec une porte d'aéronef (3),
dans lequel la passerelle d'embarquement de passagers est gérée en fonction d'au moins un signal d'état (A) se référant à l'état d'un composant auxiliaire (50, 60, 70 ,80),
**caractérisé par**
pas avant qu'un signal de position de PBB (A20) n'indique que la tête de passerelle (13) a atteint la position d'accostage :
le transfert automatique d'un système de mise à niveau (80) dans un état activé,
et l'émission d'un signal d'arrimage terminé (R1), si un signal (A80) est fourni, lequel indique que le système de mise à niveau (80) est activé.

2. Procédé selon la revendication précédente, **caractérisé en ce que**
le composant auxiliaire (50) est un auvent ;
le signal de vérification (A50) indique que l'auvent (50) est dans une position rétractée.

3. Procédé selon l'une quelconque des revendications précédentes,
**caractérisé en ce que**
le composant auxiliaire (60) est un volet adapté pour ouvrir et fermer un passage pour passagers entre la tête de passerelle (13) et le tunnel (11),
le signal de vérification (A60) indique que le volet est fermé ou ouvert.

4. Procédé selon l'une quelconque des revendications précédentes,
**caractérisé en ce que**
le composant auxiliaire (20) est un système de détection d'état de porte d'aéronef (70), qui est adapté pour détecter l'état d'une porte d'aéronef indiquant au moins que la porte d'aéronef est fermée ou non,
en particulier en cas de changement de l'état de porte, en particulier lors d'un changement d'état de fermée à ouverte, alors
- un mouvement de la tête de passerelle (13),
- un mouvement de l'auvent (50), et/ou
- un mouvement du volet (60),
est empêché.

5. Procédé selon l'une quelconque des revendications précédentes,
**caractérisé en ce que**
le composant auxiliaire est un système de plancher (40), dans lequel le système de plancher est adapté pour changer de configuration,
le signal de vérification (A40) indique, que le système de plancher (40) est dans une configuration d'attente et/ou dans une configuration d'accostage.

6. Procédé selon l'une quelconque des revendications précédentes,
**caractérisé en ce que**
dans la position rétractée, la tête de passerelle (13) est éloignée de l'aéronef, et en position d'accostage, la tête de passerelle (13) est alignée avec la porte (3) de l'aéronef (1).

7. Procédé selon l'une quelconque des revendications précédentes,
**caractérisé par**
après ou pas avant que le signal d'état de porte d'aéronef (A70) indique que la porte d'aéronef (3) est ouverte et/ou pas avant que le signal de configuration de plancher (A40) indique que le système de plancher est dans la configuration d'accostage :
le transfert automatique d'un système de mise à niveau (80) dans un état activé, en particulier le déplacement d'un sabot de sécurité (81) dans une position située sous la porte d'aéronef (3) ouverte.

8. Procédé selon l'une quelconque des revendications précédentes,
**caractérisé par**
après ou pas avant que le signal de position de PBB (A20) indique que la tête de passerelle (13) a atteint la position d'accostage et/ou après ou pas avant que le signal d'auvent (A50) indique que l'auvent (13) a atteint la position de contact et/ou pas avant qu'un signal de configuration de plancher (A40) indique que le système de plancher est dans la configuration d'accostage :
l'ouverture automatique d'un volet (60) ouvrant un passage pour passagers entre le tunnel (11) et la tête de passerelle (13).

9. Procédé selon l'une quelconque des revendications précédentes,
**caractérisé par**
l'émission d'un signal de fin d'accostage (R1), si
- un signal (A20) est fourni, lequel indique que la PBB est dans une position d'accostage, et/ou
- un signal (A40) est fourni, lequel indique qu'un système de plancher (40) est dans une configuration d'accostage, et/ou
- un signal (A50) est fourni, lequel indique que l'auvent est dans une position de contact, et/ou
- un signal (A60) est fourni, lequel indique qu'un volet (60) est ouvert, et/ou
- un signal (A70) est fourni, lequel indique que la porte d'aéronef (3) est ouverte, et/ou
en particulier, le signal de fin d'accostage (R1) est fourni à un opérateur via une interface homme-machine (IHM) .

10. Procédé selon l'une quelconque des revendications précédentes,
**caractérisé par**
après ou pas avant que le signal d'état de porte d'aéronef (A70) indique que la porte d'aéronef (3) est fermée :
le déplacement automatique du sabot de sécurité (81) dans une position d'attente hors d'une zone de pivotement de la porte d'aéronef (3).

11. Procédé selon l'une quelconque des revendications précédentes,
**caractérisé par**
après ou pas avant que le signal d'état de porte d'aéronef (A70) indique que la porte d'aéronef (3) est fermée,
le déplacement automatique de l'auvent (50) de la position de contact à la position rétractée.

12. Procédé selon l'une quelconque des revendications précédentes,
**caractérisé par**
après ou pas avant qu'un signal d'état de porte d'aéronef (A70) indique que la porte d'aéronef (3) est fermée,
le transfert automatique du système de plancher (40) d'une configuration d'accostage à une configuration d'attente.

13. Procédé selon l'une quelconque des revendications précédentes,
**caractérisé par**
l'émission d'un signal de fermeture de porte (R2), si
- un signal (A50) est fourni, lequel indique que l'auvent est dans une position rétractée, et/ou
- un signal (A60) est fourni, lequel indique qu'un volet (60) est fermé, et/ou
- un signal (A70) est fourni, lequel indique qu'une porte d'aéronef (3) est ouverte, et/ou
- un signal (A80) est fourni, lequel indique que ledit système de mise à niveau (80) est désactivé ;
en particulier, le signal de préparation à la fermeture de porte (R2) est fourni à un opérateur via une interface homme-machine (IHM) et/ou le signal de fermeture de porte (R2) est fourni à un mécanisme de fermeture de porte automatisé dans l'aéronef.

14. Procédé selon l'une quelconque des revendications précédentes
**caractérisé par**
la fourniture d'une tolérance d'ouverture de porte (DOA) à l'équipage de l'aéronef, indiquant que la porte de l'aéronef peut être ouverte en particulier durant l'accostage ;
en particulier la tolérance d'ouverture de porte est fournie par un signal visuel,
en particulier, la tolérance d'ouverture de porte (DOA) peut être reconnue par l'équipage de l'aéronef à l'intérieur de l'aéronef,
en particulier, la tolérance d'ouverture de porte (DOA) est fournie par un dispositif de signalisation (90) situé à la tête de passerelle (13).
